# EUROPEAN PATENT SPECIFICATION

(11) **EP 4 070 999 B1**
(45) Date of publication and mention of the grant of the patent: **11.03.2026**
(21) Application number: 21765216.3
(22) Date of filing: 25.01.2021
(51) Int. Cl.: B60R 11/02, G06T 1/00, H04N 7/18, G07C 5/00, G06Q 50/08, E02F 9/20, E02F 9/26, B60R 11/04, G06Q 10/063, G06Q 50/02

(54) **WORK SUPPORT SERVER AND WORK SUPPORT METHOD**
ARBEITSUNTERSTÜTZUNGSSERVER UND ARBEITSUNTERSTÜTZUNGSVERFAHREN
SERVEUR ET PROCÉDÉ D'ASSISTANCE AU TRAVAIL

(30) Priority: 04.03.2020 JP 2020036585
(43) Date of publication of application: 12.10.2022
(73) Proprietor: KOBELCO CONSTRUCTION MACHINERY CO., LTD., Hiroshima-shi, Hiroshima 731-5161 (JP)
(72) Inventor: SASAKI Hitoshi, Hiroshima-shi, Hiroshima 731-5161 (JP); SAIKI Seiji, Hiroshima-shi, Hiroshima 731-5161 (JP); YAMAZAKI Yoichiro, Hiroshima-shi, Hiroshima 731-5161 (JP)
(74) Representative: Schön, Christoph
(86) International application number: PCT/JP2021/002434
(87) International publication number: WO 2021/176883

(56) References cited:
- EP-A1- 2 966 612
- EP-A1- 4 084 470
- WO-A1-2018/179577
- JP-A- 2002 094 952
- JP-A- 2019 195 169
- JP-A- 2019 215 672
- US-A1- 2018 335 784

## Description

### Technical Field

The present invention relates to a work support server that supports a remote operation of a work machine and a work support method for supporting work of the work machine. A device and method according to the prior art are disclosed in document EP2966612.

### Background Art

Conventionally, a plurality of fixed point cameras are installed at a work site where a work machine such as a remote shovel works, so that the entire site can be seen in a bird's-eye manner and motion or work of a specific shovel can be monitored.

For example, a construction site management system in Patent Literature 1, described below, comprises a plurality of image pickup devices and an information presentation device. The plurality of image pickup devices are each installed above a construction site, and shoots the construction site in a bird's-eye manner. Respective images of all points where a manned operation vehicle can travel in the construction site are picked up without exception by at least one of the image pickup devices.

The information presentation device can generate an entire bird's-eye image in which the entire construction site is captured based on images respectively picked up by the plurality of image pickup devices and display the entire bird's-eye image in which a delivery vehicle is drawn on an in-vehicle terminal of a load carrying vehicle. The information presentation device is provided in a building in the construction site, for example (Patent Literature 1/Paragraphs 0008 to 0010, FIG. 1).

### Citation List

### Patent Literature

Patent Literature 1: Japanese Patent Laid-Open No. 2019-151968

### Summary of Invention

### Technical Problem

An image (video image) picked up by such an image pickup device is useful for grasping respective positions of a plurality of work machines at a work site. If a remote operation apparatus operates the work machines, its operation target may be switched. Specifically, an operation for switching the work machine to be operated from the work machine that is currently operating to the work machine next scheduled is performed. In this case, not only the position of the work machine scheduled to be operated but also its posture and surrounding situation are required to be grasped. However, in the information presentation device described in Patent Literature 1, described above, the information is difficult to be grasped.

The present invention has been made in view of the above-described points, and is directed to providing a work support server that makes a worker recognize a situation surrounding a plurality of work machines to be operated, a relative positional relationship thereamong, and the like and supports work.

### Solution to Problem

According to the invention, a work support server that supports work of a plurality of work machines to be operated such that the work machines to be operated can be selectively remotely operated in response to an operation to be performed for a remote operation apparatus including a display device comprises a first support processing element that recognizes respective positions of the work machines to be operated by the remote operation apparatus, and a second support processing element that displays, when an operation target of the remote operation apparatus is switched from a first work machine to a second work machine, an image including respective positions of the first work machine and the second work machine simultaneously captured on the display device.

The work support server according to the present invention comprises the first support processing element and the second support processing element in order to support work to be performed by the remote operation apparatus operating the work machines to be operated. The first support processing element recognizes the respective positions of the work machines to be operated.

The second support processing element performs display control to display the image including the respective positions of the first work machine and the second work machine simultaneously captured when the operation target is switched from work of the first work machine to work of the second work machine, to display the image on the display device. As a result, the work support server enables a worker to recognize a relative positional relationship among the plurality of work machines, for example, and stably and reliably perform the work.

According to the invention, a work support method for supporting work of a plurality of work machines to be operated such that the work machines to be operated can be selectively remotely operated in response to an operation to be performed for a remote operation apparatus including a display device comprises a first step of recognizing respective positions of the work machines to be operated by the remote operation apparatus, and a second step of displaying, when an operation target of the remote operation apparatus is switched from a first work machine to a second work machine, an image including respective positions of the first work machine and the second work machine simultaneously captured on the display device.

The work support method according to the present invention comprises the first step and the second step in order to support work to be performed by the remote operation apparatus operating the work machines to be operated. In the first step, the respective positions of the work machines to be operated are recognized. In the second step, display control to display the image including the respective positions of the first work machine and the second work machine simultaneously captured is performed when the operation target is switched from work of the first work machine to work of the second work machine, to display the image on the display device. As a result, the work support method enables a worker to recognize a relative positional relationship among the plurality of work machines, for example, and stably and reliably perform the work.

### Brief Description of Drawings

FIG. 1 is a diagram illustrating an outline of a work support system according to an embodiment of the present invention.
FIG. 2 is a diagram illustrating a configuration of an operation mechanism in a work machine.
FIG. 3 is a diagram for describing details of the work machine.
FIG. 4 illustrates an example of a bird's-eye image including a work site viewed from the sky.
FIG. 5 is a flowchart of processing to be performed by each of a work support server and a remote operation apparatus.
FIG. 6 is a flowchart of display processing of a process in which the work machine is switched.
FIG. 7 is a flowchart of processing for determining a first condition.
FIG. 8 illustrates an example (1) of a picked-up image to be displayed on an image output device.
FIG. 9 illustrates an example (2) of a picked-up image to be displayed on the image output device.

### Description of Embodiment

Details of a work support server according to the present invention will be described below with reference to the drawings.

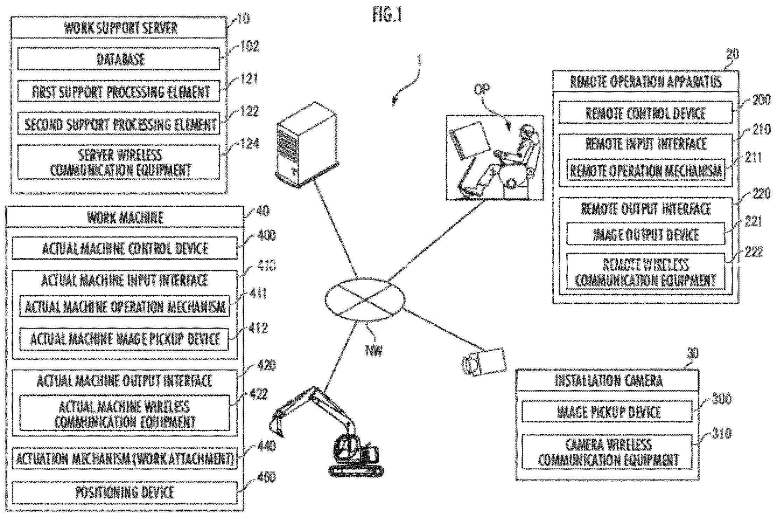

A work support server 10 according to an embodiment of the present invention and a work support system 1 including the work support server 10 will be described with reference to FIG. 1. The work support system 1 comprises, in addition to a work machine 40, the work support server 10, a remote operation apparatus 20 that remotely operates the work machine 40, and a plurality of installation cameras 30 that are respectively installed at predetermined positions of a work site and pick up an image of the work machine 40.

The work support server 10, the remote operation apparatus 20, the installation camera 30, and the work machine 40 are configured to be communicable with one another by a network NW. The work support server 10 automatically selects the appropriate installation camera 30 in response to switching of the work machine 40 to be remotely operated by the remote operation apparatus 20 to another work machine 40, movement of the work machine 40 in response to a remote operation of the remote operation apparatus 20, a work content of the work machine 40 to be remotely operated by the remote operation apparatus 20, and the like. The work support server 10 outputs a picked-up image to an image output device 221, described below, in order to support an operation of an operator OP of the remote operation apparatus 20.

The work support server 10 comprises a database 102, a first support processing element 121, a second support processing element 122, and server wireless communication equipment 124. The database 102 stores and holds a picked-up image picked up by the installation camera 30, for example. The database 102 may be constituted by a database server separate from the work support server 10.

Each of the support processing elements 121 and 122 is constituted by an arithmetic processing unit (a single core processor or a multi-core processor or a processor core constituting the processor). Each of the support processing elements 121 and 122 reads required data and software from a storage device such as a memory and performs arithmetic processing conforming to the software with the data used as a target. The server wireless communication equipment 124 instructs the image output device 221 to perform display via the network NW, and receives the picked-up image from the installation camera 30.

Then, the remote operation apparatus 20 comprises a remote control device 200, a remote input interface 210, and a remote output interface 220. The remote control device 200 is constituted by an arithmetic processing unit (a single core processor or a multi-core processor or a processor core constituting the processor). The remote control device 200 reads required data and software from a storage device such as a memory and performs arithmetic processing conforming to the software with the data used as a target.

The remote input interface 210 comprises a remote operation mechanism 211. The remote output interface 220 comprises the image output device 221 and remote wireless communication equipment 222. The remote wireless communication equipment 222 transmits an operation signal to the work machine 40 via the network NW, and receives the picked-up image from the installation camera 30.

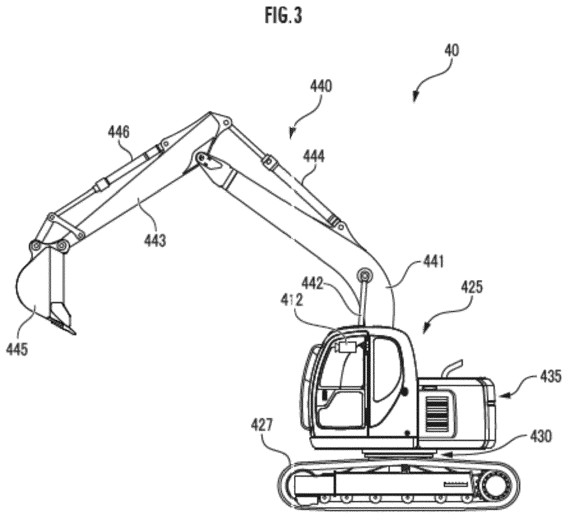

The remote operation mechanism 211 comprises a traveling operation device, a turning operation device, a boom operation device, an arm operation device, and a bucket operation device. Each of the operation devices has an operation lever that receives a rotation operation. The operation lever (traveling lever) of the traveling operation device is operated in order to operate a lower traveling body 427 in the work machine 40 (see FIG. 3). The traveling lever may also serve as a traveling pedal. For example, a fixed traveling pedal may be provided in a base portion or a lower end portion of the traveling lever.

The operation lever (turning lever) of the turning operation device is used to operate a hydraulic turning motor constituting a turning mechanism 430 in the work machine 40. The operation lever (boom lever) of the boom operation device is used to operate a boom cylinder 442 in the work machine 40 (see FIG. 3).

The operation lever (arm lever) of the arm operation device is used to operate an arm cylinder 444 in the work machine 40. The operation lever (bucket lever) of the bucket operation device is used to operate a bucket cylinder 446 in the work machine 40 (see FIG. 3).

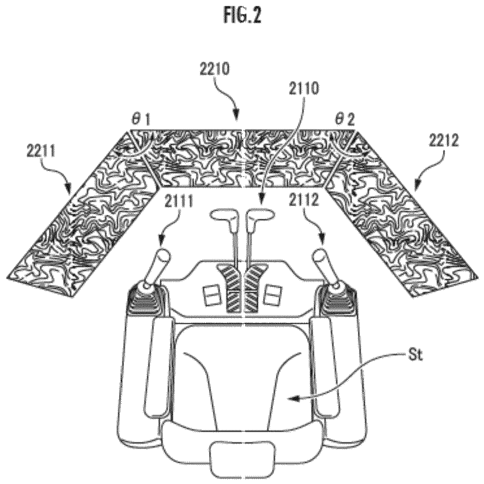

FIG. 2 illustrates an example of the operation levers constituting the remote operation mechanism 211 and a seat St for an operator OP to sit. The seat St has a form such as a high back chair with an armrest. The seat St may have any form in which the operator OP can sit, for example, a form like a low back chair with no headrest or a form like a chair with no backrest.

A pair of left and right traveling levers 2110 respectively corresponding to left and right crawlers are laterally arranged side by side in front of the seat St. The one operation lever may also serve as a plurality of operation levers. For example, a right-side operation lever 2111 provided in front of a right-side frame of the seat St may function as a boom lever when operated in a front-rear direction and function as a bucket lever when operated in a left-right direction.

Similarly, a left-side operation lever 2112 provided in front of a left-side frame of the seat St may function as an arm lever when operated in the front-rear direction and function as a turning lever when operated in the left-right direction. A lever pattern may be arbitrarily changed in response to an operation instruction from the operator OP.

The image output device 221 comprises a central image output device 2210, a left-side image output device 2211, and a right-side image output device 2212 respectively having substantially rectangular screens arranged in front of, diagonally leftward in front of, and diagonally rightward in front of the seat St, as illustrated in FIG. 2. Respective shapes and sizes of the screens (image display regions) of the central image output device 2210, the left-side image output device 2211, and the right-side image output device 2212 may be the same as or different from one another.

A right edge of the left-side image output device 2211 is adjacent to a left edge of the central image output device 2210 such that the screen of the central image output device 2210 and the screen of the left-side image output device 2211 form an inclined angle θ1 (e.g., 120° ≤ θ1 ≤ 150°). Similarly, a left edge of the right-side image output device 2212 is adjacent to a right edge of the central image output device 2210 such that the screen of the central image output device 2210 and the screen of the right-side image output device 2212 form an inclined angle θ2 (e.g., 120° ≤ θ2 ≤ 150°). The inclined angles θ1 and θ2 may be the same as or different from each other.

The respective screens of the central image output device 2210, the left-side image output device 2211, and the right-side image output device 2212 may be parallel to one another in a vertical direction, or may be inclined in the vertical direction. At least one of the central image output device 2210, the left-side image output device 2211, and the right-side image output device 2212 may be constituted by a plurality of separated image output devices. For example, the central image output device 2210 may be constituted by a pair of image output devices, which are vertically adjacent to each other, each having a substantially rectangular screen. Each of the image output devices 2210 to 2212 may further comprise a speaker (voice output device).

Referring to FIG. 1 again, the installation camera 30 comprises an image pickup device 300 and camera wireless communication equipment 310. The image pickup device 300 has a predetermined image pickup range, and a viewing angle that is movable up and down and right and left may be set therein. The image pickup device 300 may start image pickup when the installation camera 30 is selected, although it always continues the image pickup basically during the work.

The camera wireless communication equipment 310 transmits a picked-up image picked up by the image pickup device 300 to the server wireless communication equipment 124 in the work support server 10 and the remote wireless communication equipment 222 in the remote operation apparatus 20 via the network NW. An instruction to switch display of an image pickup target, a direction, zoom-in, zoom-out, or the like may be issued while image analysis is performed on the work support server 10 side or may be issued from the operator OP side.

Then, the work machine 40 comprises an actual machine control device 400, an actual machine input interface 410, an actual machine output interface 420, and an actuation mechanism (work attachment) 440. The actual machine control device 400 is constituted by an arithmetic processing unit (a single core processor or a multi-core processor or a processor core constituting the processor). The actual machine control device 400 reads required data and software from a storage device such as a memory and performs arithmetic processing conforming to the software with the data used as a target.

Then, FIG. 3 illustrates an example of the work machine 40 according to the present embodiment.

The work machine 40 is a crawler shovel (construction machine), for example, and comprises the crawler type lower traveling body 427 and an upper turning body 435 turnably loaded into the lower traveling body 427 via the turning mechanism 430. A front left side portion of the upper turning body 435 is provided with a cab (operation room) 425, and a front central portion of the upper turning body 435 is provided with the actuation mechanism 440.

Referring to FIG. 1 again, the actual machine input interface 410 comprises an actual machine operation mechanism 411 and an actual machine image pickup device 412. The actual machine operation mechanism 411 comprises a plurality of operation levers arranged similarly to the remote operation mechanism 211 around a seat arranged in the cab 425. The cab 425 is provided with a driving mechanism or a robot that receives a signal corresponding to an operation mode of the remote operation lever and moves the actual machine operation levers based on the received signal.

The actual machine image pickup device 412 is installed in the cab 425, and picks up an image of an environment including at least a part of the actuation mechanism 440 through a front window of the cab 425. The work machine 40 may be constituted by a plurality of image pickup devices in addition to the actual machine image pickup device 412, and may comprise an omnidirectional camera capable of picking up an image of all directions (360°) of a region around the work machine 40.

The actual machine output interface 420 comprises actual machine wireless communication equipment 422. The actual machine wireless communication equipment 422 receives a signal corresponding to the operation mode of the remote operation lever from the remote wireless communication equipment 222 in the remote operation apparatus 20 via the network NW. The signal is further transmitted to the actual machine control device 400, and the work machine 40 operates in response to the signal. The cab 425 is provided with a driving mechanism or a robot that actuates the actual machine operation levers based on the signal.

The actuation mechanism (work attachment) 440 comprises a boom 441 mounted on the upper turning body 435, an arm 443 rotatably connected to a distal end portion of the boom 441, and a bucket 445 rotatably connected to a distal end portion of the arm 443. The boom cylinder 442, the arm cylinder 444, and the bucket cylinder 446 each constituted by a stretchable hydraulic cylinder are mounted on the actuation mechanism 440. A positioning device 460 is a device that detects a position of the work machine 40. The positioning device 460 is constituted by a GNSS receiver (GNSS: Global Navigation Satellite System), for example.

The boom cylinder 442 is interposed between the boom 441 and the upper turning body 435 by expanding and contracting upon being supplied with hydraulic oil to rotate the boom 441 in a rise and fall direction. The arm cylinder 444 is interposed between the arm 443 and the boom 441 by expanding and contracting upon being supplied with hydraulic oil to rotate the arm 443 around a horizontal axis relative to the boom 441.

The bucket cylinder 446 is interposed between the bucket 445 and the arm 443 by expanding and contracting upon being supplied with hydraulic oil to rotate the bucket 445 around a horizontal axis relative to the arm 443.

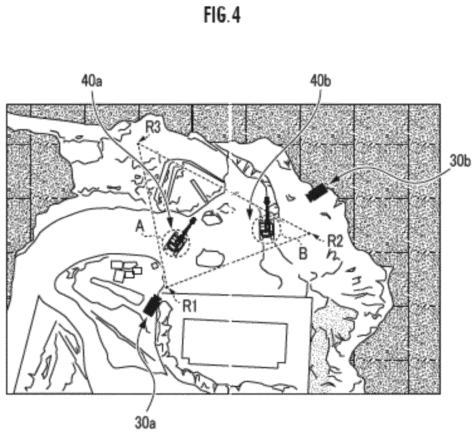

FIG. 4 illustrates an example of an arrangement of the installation camera 30 at the work site.

FIG. 4 illustrates a bird's-eye image including the work site viewed from the sky. At the work site, an installation camera 30a and an installation camera 30b are respectively installed at locations spaced from each other. A region R indicated by a broken line surrounded by points R1 to R3 is an entire region an image of which can be picked up by the two installation cameras 30a and 30b. In the region R, there exist a first work machine 40a and a second work machine 40b. An installation camera may be further installed at a position different from the installation cameras 30a and 30b.

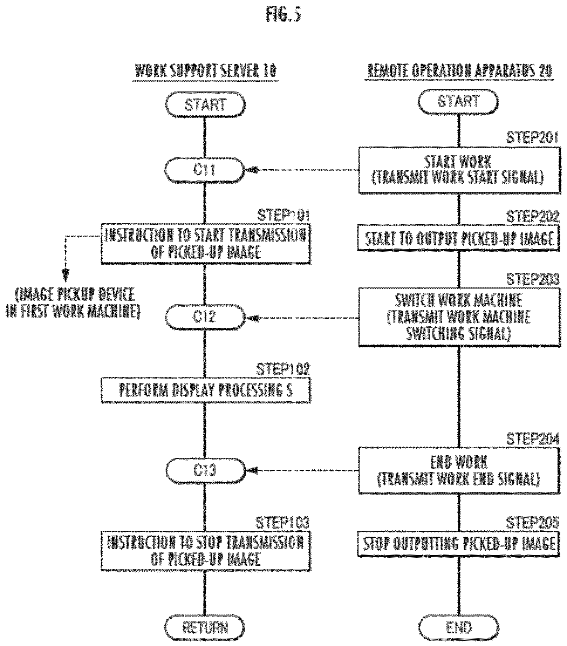

Then, a flowchart relating to a function of the work support system 1 according to the present embodiment will be described with reference to FIG. 5. Switching of the installation camera 30, display of a picked-up image, and the like will be described appropriately with reference to FIG.s 6 to 9.

Blocks "C11" to "C13" in the flowchart mean transmission and/or reception of data and mean that processing in a branch direction is performed on condition that the data is transmitted and/or received, although used to simplify description.

First, in the remote operation apparatus 20, the operator OP starts work of the first work machine 40a (STEP201). At this time, the remote operation apparatus 20 transmits a "work start signal" toward the work support server 10.

The work support server 10 receives the work start signal (C11), and issues an instruction to start transmission of a picked-up image (STEP101). The actual machine image pickup device 412 loaded into the first work machine 40a is selected. An image pickup device to be selected is not limited to the actual machine image pickup device 412. For example, a first camera, which is installed at a predetermined position of the work site and an image pickup range of which includes the first work machine 40a, may be selected simultaneously with the actual machine image pickup device 412.

Then, the remote operation apparatus 20 starts to output the picked-up image picked up by the image pickup device selected in STEP101 to the image output device 221 (STEP202). As a result, the operator OP can confirm how an area ahead of the work machine 40a is viewed through the front window of the cab 425 in the first work machine 40a from inside the cab 425 by seeing the image output device 221.

If the image pickup device is simultaneously selected in addition to the actual machine image pickup device 412, the operator OP can simultaneously confirm a state of the work machine 40a from another viewpoint. If the installation camera 30a is simultaneously selected, for example, the operator OP can also confirm a state surrounding the work machine 40a.

Then, the remote operation apparatus 20 transmits, if the operator OP performs an operation for switching work of the first work machine 40a to work of the second work machine 40b, a "work machine switching signal" toward the work support server 10 (STEP203).

The work support server 10 receives the work machine switching signal (C12), and performs display processing S for performing output representing a process in which an operation target is switched to the image output device 221 (STEP 102).

Flowcharts relating to the above-described display processing S will be described with reference to FIG.s 6 and 7.

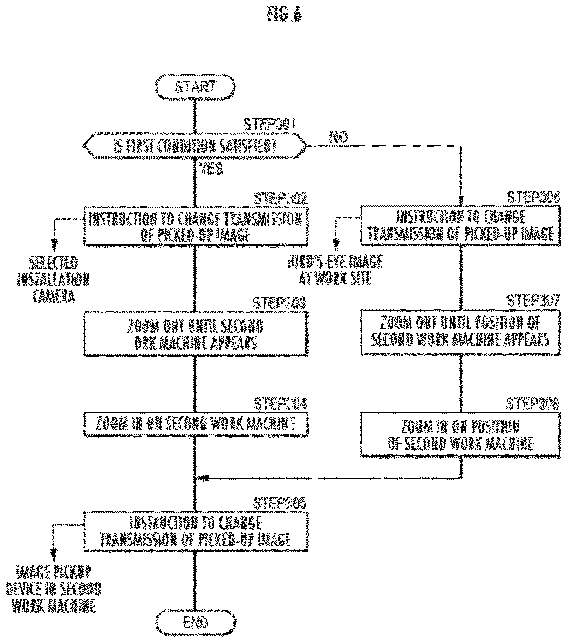

If the display processing S starts to be performed, it is first determined whether or not a first condition is satisfied (FIG. 6/STEP301). An output mode of the process in which the operation target is switched for the image output device 221 is varied depending on whether or not the first condition is satisfied.

The first condition is that the first work machine 40a and the second work machine 40b are captured in a picked-up image picked up by each of the installation cameras 30. If the installation camera 30 has a zoom-in and zoom-out function, the first condition is that the first work machine 40a and the second work machine 40b are captured in the picked-up image in a state of a maximum image pickup possible range at the time of zooming out.

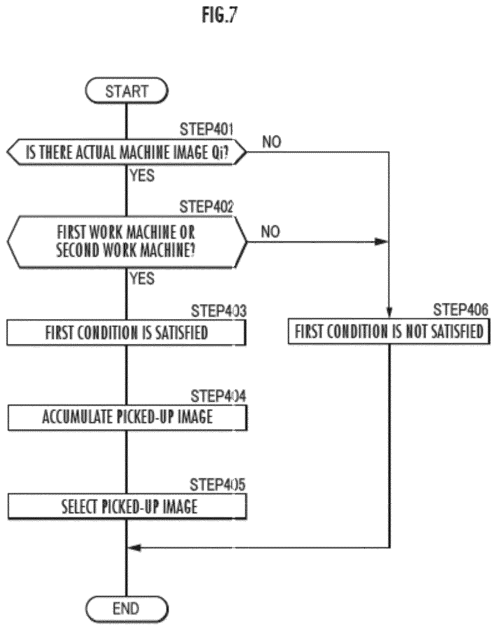

Determination whether or not the first condition is satisfied is specifically performed in the following manner. The work support server 10 performs image analysis processing for the picked-up image picked up by each of the installation cameras 30, and determines the presence or absence of an actual machine image Qi representing the work machine 40 appearing in the picked-up image (FIG. 7/STEP401).

If a result of the determination is affirmative (FIG. 7/YES in STEP401), the first support processing element 121 determines which of the first work machine 40a and the second work machine 40b corresponds to the actual machine image Qi (FIG. 7/STEP402). Specifically, it is determined whether or not actual space positions of the first work machine 40a and the second work machine 40b corresponding to the actual machine image Qi respectively match or correspond to actual space positions of the first work machine 40a and the second work machine 40b registered in the database 102.

Coordinates of a position (e.g., a position of a center of gravity) of the actual machine image Qi in an image coordinate system are converted into coordinates in an actual space coordinate system, to find the actual space position of the work machine 40 corresponding to the actual machine image Qi. In this case, an actual space distance from the installation camera 30 to the work machine 40 is estimated based on the size of the actual machine image Qi in each of the picked-up images.

In the coordinate conversion, a position of the work machine 40 in a coordinate system of the installation camera 30 is recognized, and a coordinate conversion factor (a matrix or a quaternion) representing a position and a posture of the image pickup device in the actual space coordinate system is used. The coordinate conversion factor is registered in the database 102 in association with an identifier (thus an image identifier) of the image pickup device.

When mutual communication between the remote operation apparatus 20 (client) and the work machine 40 is established, an identifier of each of the remote operation apparatus 20 (or an operator thereof) and the work machine 40 and an actual space position of the work machine 40 are associated with each other and are registered in the database 102.

The actual space position of the work machine 40 is measured by the positioning device 460 loaded into the work machine 40. When the work machine 40 transmits the actual space position or its time series to the work support server 10, the actual space position of the work machine 40 registered in the database 102 is updated. As a result, the respective actual space positions of the first work machine 40a and the second work machine 40b can be searched for or recognized from the database 102 based on the identifier.

If a result of the determination is affirmative (FIG. 7/YES in STEP402), the work support server 10 assumes that the first condition is satisfied (FIG. 7/STEP403). In this case, the work support server 10 attaches a flag to each of the picked-up images and stores the picked-up images in the database 102. That is, the work support server 10 accumulates the picked-up image in which the actual machine image Qi corresponding to at least one of the first work machine 40a and the second work machine 40b appears (FIG. 7/STEP404).

Then, the picked-up image in which a positional relationship between the first work machine 40a and the second work machine 40b and a state of the work site between the first work machine 40a and the second work machine 40b are captured is selected from among the picked-up images accumulated in the database 102 (FIG. 7/STEP405).

The selection of the picked-up image (FIG. 7/STEP405) is performed according to the following criteria (1) to (4), for example. A point is added every time each of the criteria is satisfied, and the uppermost point among the points is selected.
(1) The first work machine 40a and the second work machine 40b simultaneously appear.
(2) The area of the actual machine image Qi is large.
(3) The first work machine 40a and the second work machine 40b are laterally arranged side by side.
(4) The first work machine 40a and the second work machine 40b do not overlap each other.

On the other hand, if the result of the determination of the presence or absence of the actual machine image Qi is negative (FIG. 7/NO in STEP401) or if a result of the determination which of the first work machine 40a and the second work machine 40b corresponds to the actual machine image Qi is negative (FIG. 7/NO in step STEP402), the work support server 10 assumes that the first condition is not satisfied (FIG. 7/STEP406).

If the first condition is satisfied (FIG. 6/YES in STEP301), the work support server 10 issues an instruction to change transmission of the picked-up image (FIG. 6/STEP302). Specifically, the work support server 10 selects the installation camera 30 that shoots the picked-up image selected by the picked-up image selection (FIG. 7/STEP405).

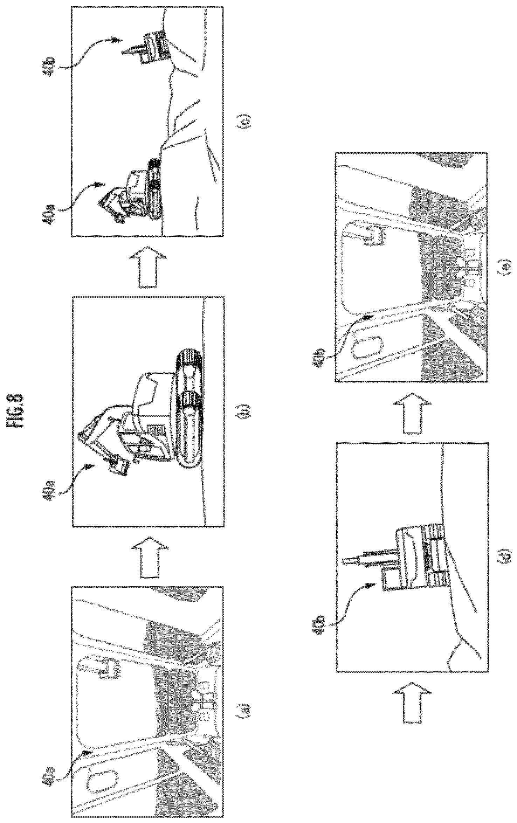

The work support server 10 instructs the installation camera 30 to zoom in with the first work machine 40a as the center. As a result, an image to be outputted to the image output device 221 is switched from an image including an area ahead of the work machine 40a viewed through the front window of the cab 425 in the first work machine 40a from inside the cab 425 as illustrated in FIG. 8(a) to an image, obtained by zooming in on the first work machine 40a, to be picked up by the installation camera 30 as illustrated in FIG. 8(b).

Then, the work support server 10 instructs the installation camera 30 to zoom out until the second work machine appears therein (FIG. 6/STEP303). As a result, the first work machine 40a and the second work machine 40b are captured in an image pickup range of the installation camera 30, and the picked-up image is outputted to the image output device 221, as illustrated in FIG. 8(c).

Then, the work support server 10 instructs the installation camera 30 to zoom in with the second work machine 40b as the center (FIG. 6/STEP304). As a result, a picked-up image, obtained by zooming in on the second work machine 40b, to be picked up by the installation camera 30 is outputted to the image output device 221, as illustrated in FIG. 8(d).

Finally, the work support server 10 issues an instruction to change transmission of the picked-up image (FIG. 6/STEP305). As a result, a picked-up image including an area ahead of the second work machine 40b viewed through the front window of the cab 425 in the second work machine 40b from inside the cab 425 is outputted to the image output device 221, as illustrated in FIG. 8(e).

As described above, the process in which the operation target is switched is displayed, and the display processing S ends (STEP102). Thus, the work support server 10 (the first support processing element 121) controls the display of the process in which the operation target is switched, to make the operator OP recognize the process.

The work support server 10 (the second support processing element 122) may display the respective images of the first work machine 40a and the second work machine 40b by flashing and coloring the images. This enables the operator OP to easily grasp respective current positions of the work machines 40a and 40b, a positional relationship therebetween, and the like.

As illustrated in FIG. 4, an arrow marker M oriented from the first work machine 40a to the second work machine 40b may be displayed, to suggest that a remote operation target of the remote operation apparatus 20 is changed from the first work machine 40a to the second work machine 40b.

If the first condition is not satisfied (FIG. 6/NO in STEP301), the work support server 10 issues the instruction to change transmission of the picked-up image (FIG. 6/STEP306). Specifically, the work support server 10 selects bird's-eye image data of the work site where the first work machine 40a is positioned, and further issues an instruction to zoom in on the birds'-eye image centered around the first work machine 40a.

An example of the bird's-eye image data may be a picture taken by an aircraft in advance, or may be map information. As a result, an image obtained by zooming in on the bird's-eye image data centered around the position of the first work machine 40a is outputted to the image output device 221.

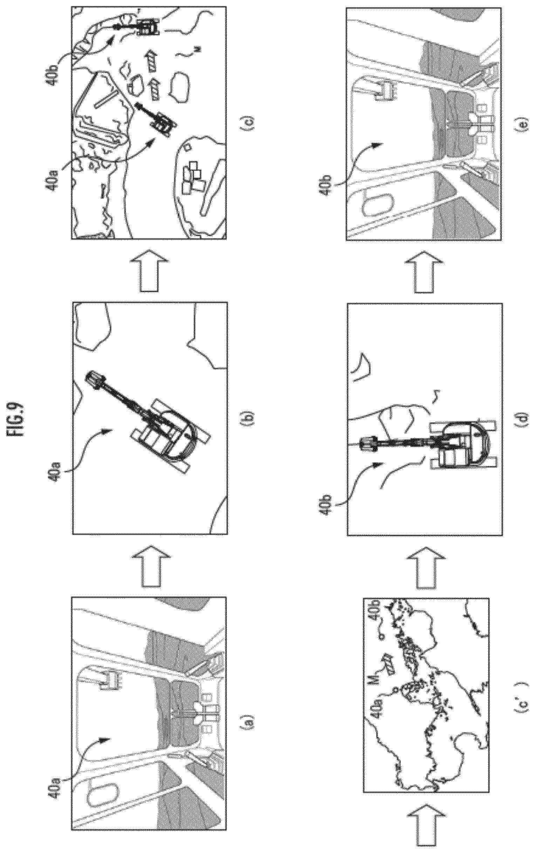

FIG. 9 illustrates an example of display of the image output device 221 in this case.

An image to be outputted to the image output device 221 is switched from an image including an area ahead of the work machine 40a viewed through the front window of the cab 425 in the first work machine 40a from inside the cab 425 as illustrated in FIG. 9(a) to an image obtained by zooming in on bird's-eye image data of the work site where the first work machine 40a is positioned centered around the position of the first work machine 40a as illustrated in FIG. 9(b). A pseudo machine image of the work machine 40a is displayed at a position of the first work machine 40a.

Then, the work support server 10 zooms out the bird's-eye image of the work site where the first work machine 40a is positioned until a position of the second work machine appears therein (FIG. 6/STEP307). A pseudo machine image of the work machine 40b is displayed at a position of the second work machine 40b. Specifically, a bird's-eye image in which the respective positions of the first work machine 40a and the second work machine 40b are captured is outputted to the image output device 221, as illustrated in FIG. 9(c).

A work site where the first work machine 40a is positioned and a work site where the second work machine 40b is positioned may be greatly spaced apart from each other. In this case, the bird's-eye image is zoomed out, and is then zoomed out until the respective positions of the first work machine 40a and the second work machine 40b appear on a map, as illustrated in FIG. 9(c').

Then, the work support server 10 issues an instruction to zoom in on the bird's-eye image at the position of the second work machine 40b (FIG. 6/STEP308). As a result, the bird's-eye image zoomed in at the position of the second work machine 40b is outputted to the image output device 221, as illustrated in FIG. 9(d).

Finally, the work support server 10 outputs to the image output device 221 an image including an area ahead of the second work machine 40b viewed through the front window of the cab 425 in the second work machine 40b from inside the cab 425, as illustrated in FIG. 9(e).

As described above, the process in which the operation target is switched is displayed, and the display processing S ends (STEP102). Thus, the work support server 10 (the first support processing element 121) controls the display of the process in which the operation target is switched, to make the operator OP recognize the process.

The work support server 10 (the second support processing element 122) may display the respective images of the first work machine 40a and the second work machine 40b by flashing and coloring the images in the bird's-eye image. This enables the operator OP to easily grasp respective current positions of the work machines 40a and 40b, a positional relationship therebetween, and the like.

An arrow marker M oriented from the first work machine 40a to the second work machine 40b may be displayed, to suggest that a remote operation target of the remote operation apparatus 20 is changed from the first work machine 40a to the second work machine 40b.

Images to be displayed on the image output device 221 illustrated in FIG.s 8 and 9 may be automatically continuously switched, or may be switched by a worker's operation (e.g., button operation).

Even if it is determined that the first condition is satisfied (FIG. 6/YES in STEP301), display processing in a case where the first condition is not satisfied (FIG. 6/NO in STEP301) may be performed. In this case, for example, processing in the case where the first condition is satisfied and processing in the case where the first condition is not satisfied can be simultaneously selected. In such a case, any display processing can be made selectable depending on worker's preference.

Then, in the work support server 10, the operator OP ends the work of the second work machine 40b (STEP204). At this time, a "work end signal" is transmitted toward the work support server 10.

The work support server 10 receives the work end signal (C13), and issues an instruction to stop transmission of the picked-up image (STEP 103). The work support server 10 may issue the transmission stop instruction to not only a second camera that is currently transmitting the picked-up image but also all cameras at the work site. A series of processing of the work support server 10 thus ends.

Finally, the remote operation apparatus 20 stops outputting the picked-up image (STEP205). As a result, display of the picked-up image on the image output device 221 ends. A series of processing of the remote operation apparatus 20 thus ends.

In the above-described embodiment, the work support server 10 performs control to switch the plurality of installation cameras 30 respectively installed at predetermined positions of the work site and display a process in which the operation target is changed from the first work machine 40a to the second work machine 40b. However, if there is a camera to be substituted for the installation camera 30, the camera may be used. If a camera included in a third work machine 40c can shoot the first work machine 40a and the second work machine 40b, for example, the camera included in the third work machine 40c can also be selected to display the process.

Thus, the work support server 10 uses the picked-up images respectively picked up by the installation camera 30, the actual machine image pickup device 412 in the work machine 40, and the like, to display switching of the work machine 40 on the image output device 221. This makes it easy for the operator OP to grasp a situation surrounding the work machine 40, a relative positional relationship, and the like.

In the work support server according to the present invention, the first support processing element may preferably grasp respective positions and image pickup directions of the plurality of installation cameras arranged at the work site where the work machine is positioned, and select, from the respective positions and image pickup directions of the installation cameras and respective positions of the first work machine and the second work machine, an installation camera that simultaneously captures the positions, and the second support processing element may preferably perform installation camera display processing for displaying on the display device a picked-up image picked up by the installation camera selected by the first support processing element.

According to this configuration, the first support processing element can recognize the respective positions of the first work machine and the second work machine, and therefore can select the installation camera that simultaneously captures the positions from among the plurality of installation cameras arranged at the work site. The second support processing element can present each of the positions of the first work machine and the second work machine to a worker from the picked-up image picked up by the installation camera. As a result, the work support server can present a situation around the work machine.

In the work support server according to the present invention, the installation camera preferably picks up, based on the respective positions of the first work machine and the second work machine recognized by the first support processing element, a bird's-eye image including the positions seen in a bird's-eye manner, and the second support processing element preferably performs bird's-eye image display processing for displaying on the display device the bird's-eye image picked up.

According to this configuration, the bird's-eye image that enables each of the positions of the first work machine and the second work machine to be recognized is displayed on the display device in the remote operation apparatus. As a result, the work support server enables the worker to recognize the relative positional relationship between the work machines, for example.

In the work support server according to the present invention, the work support server can perform installation camera display processing for causing the first support processing element to grasp respective positions and image pickup directions of the installation cameras arranged at the work site where the work machines are positioned and select, from the respective positions and image pickup directions of the installation cameras and respective positions of the first work machine and the second work machine, the installation camera that simultaneously captures the positions, and causing the second support processing element to display on the display device a picked-up image picked up by the installation camera selected by the first support processing element, and bird's-eye image display processing for causing the first support processing element to select, based on the respective positions of the first work machine and the second work machine, a bird's-eye image including the positions simultaneously captured, and causing the second support processing element to display on the display device the bird's-eye image selected by the first support processing element, and the second support processing element preferably performs the bird's-eye image display processing when the installation camera display processing cannot be performed or when it is determined that the installation camera display processing is set not to be performed.

If the respective positions of the first work machine and the second work machine can be confirmed in the picked-up image picked up by the installation camera, the work support server performs the installation camera display processing, to display on the display device the picked-up image including the positions of the work machines simultaneously captured.

On the other hand, if the respective positions of the first work machine and the second work machine cannot be confirmed in the picked-up image picked up by the installation camera, the work support server performs the bird's-eye image display processing, to display a birds-eye image instead of the picked-up image. As a result, the work support server enables the worker to recognize the relative positional relationship between the work machines, for example. The work support server can display the bird's-eye image depending on setting even if it can confirm the respective positions of the first work machine and the second work machine in the picked-up image picked up by the installation camera.

In the work support server according to the present invention, the first support processing element preferably determines that the installation camera display processing cannot be performed when any of the installation cameras arranged at the work site where the first work machine is positioned cannot capture each of the respective positions of the first work machine and the second work machine.

The display device preferentially displays the picked-up image picked up by the installation camera in real time. However, the first support processing element determines that the installation camera display processing cannot be performed if the respective positions of the first work machine and the second work machine cannot be simultaneously captured. In this case, the work support server enables the worker to reliably recognize a relative position between the work machines by displaying the bird's-eye image, for example.

In the work support server according to the present invention, the first support processing element preferably performs transition image display processing for making a transition of an image, including the positions simultaneously captured, displayed on the display device to a state where the first work machine is zoomed in, a state where the first work machine is zoomed out so that the second work machine also appears, and a state where the second work machine is zoomed in in this order.

The work support server enables the worker to reliably recognize the work machine to be closely observed by performing the transition image display processing. The work support server enables the worker to reliably recognize a change of a control target from the first work machine to the second work machine and can present the relative positional relationship between the work machines.

### Reference Signs List

1...work support system, 10...work support server, 20...remote operation apparatus, 30, 30a, 30b...installation camera, 40, 40a, 40b...work machine, 102...database, 121...first support processing element, 122...second support processing element, 123...server wireless communication equipment, 200...remote control device, 210...remote input interface, 220...remote output interface, 221...image output device, 222...remote wireless communication equipment, 300...image pickup device, 310...camera wireless communication equipment, 400...actual machine control device, 410...actual machine input interface, 412...actual machine image pickup device, 420...actual machine output interface, 425...cab, 427...lower traveling body, 430...turning mechanism, 435...upper turning body, 440...actuation mechanism (work attachment), 445...bucket, 460...positioning device, 2110...traveling lever, 2111...right-side operation lever, 2112...left-side operation lever.

## Claims

1. A work support server (10) that supports work of a plurality of work machines (40) to be operated such that the work machines to be operated is selectively remotely operated in response to an operation of a remote operation apparatus including a display device, the work support server comprising:
a first support processing element (121) that recognizes respective actual space positions of the work machines to be operated by the remote operation apparatus; and
a second support processing element (122) that displays, when an operation target of the remote operation apparatus is switched from a first work machine to a second work machine, an image including respective actual space positions of the first work machine and the second work machine simultaneously captured on the display device, **characterised in that**
the first support processing element selects, from positions and image pickup directions of the installation cameras (30) and the respective positions of the first work machine and the second work machine, an installation camera that simultaneously captures the first work machine (40a) and the second work machine (40b) in an image pickup range thereof, and
the second support processing element performs installation camera display processing for displaying on the display device a picked-up image picked up by the installation camera selected by the first support processing element.

2. The work support server according to claim 1, wherein
the installation camera picks up, based on the respective positions of the first work machine and the second work machine recognized by the first support processing element, a bird's-eye image including the respective positions seen in a bird'-eye manner, and
the second support processing element performs bird's-eye image display processing for displaying on the display device the bird's-eye image picked up.

3. The work support server according to claim 1, wherein
the work support server performs
installation camera display processing for causing the first support processing element to grasp each positions and image pickup directions of installation cameras arranged at a work site where the work machines are positioned and select, from the positions and image pickup directions of the installation cameras and respective positions of the first work machine and the second work machine, an installation camera that simultaneously captures the respective positions, and causing the second support processing element to display on the display device a picked-up image picked up by the installation camera selected by the first support processing element, and
bird's-eye image display processing for causing the first support processing element to select, based on the respective positions of the first work machine and the second work machine, a bird's-eye image including the respective positions simultaneously captured, and causing the second support processing element to display on the display device the bird's-eye image selected by the first support processing element, and
the second support processing element performs the bird's-eye image display processing when the installation camera display processing cannot be performed or when it is determined that the installation camera display processing is set not to be performed.

4. The work support server according to claim 3, wherein
the first support processing element determines that the installation camera display processing cannot be performed when any of the installation cameras arranged at the work site where the first work machine is positioned cannot capture each of the respective positions of the first work machine and the second work machine.

5. The work support server according to any one of claims 1 to 4, wherein
the first support processing element performs transition image display processing for making a transition of an image, including the respective positions simultaneously captured, displayed on the display device to a state where the first work machine is zoomed in, a state where the first work machine is zoomed out so that the second work machine also appears, and a state where the second work machine is zoomed, in in this order.

6. A work support method for supporting work of a plurality of work machines to be operated such that the work machines (40) to be operated is selectively remotely operated in response to an operation of a remote operation apparatus including a display device, the work support method comprising:
a first step of recognizing respective positions of the work machines to be operated by the remote operation apparatus; and
a second step of displaying, when an operation target of the remote operation apparatus is switched from a first work machine (40a) to a second work machine (40b),
an image including respective positions of the first work machine and the second work machine simultaneously captured on the display device **characterized in that** in the first step an installation camera (30) that simultaneously captures the first work machine and the second work machine in an image pickup range thereof is selected from positions and image pickup directions of the installation cameras and the respective positions of the first work machine and the second work machine and in the second step an installation camera display processing for displaying on the display device a picked-up image picked up by the installation camera selected by the first support processing element is performed.

## Patentansprüche

1. Arbeitsunterstützungsserver (10), der die Arbeit einer Vielzahl von zu betreibenden Arbeitsmaschinen (40) unterstützt, so dass die zu betreibenden Arbeitsmaschinen (40) in Reaktion auf eine Betätigung eines Fernsteuerungsgeräts, das eine Anzeigevorrichtung umfasst, selektiv ferngesteuert werden, wobei der Arbeitsunterstützungsserver Folgendes umfasst:
ein erstes Unterstützungsverarbeitungselement (121), das die jeweiligen tatsächlichen räumlichen Positionen der durch das Fernsteuerungsgerät zu betreibenden Arbeitsmaschinen erkennt, und
ein zweites Unterstützungsverarbeitungselement (122), das, wenn ein Betriebsziel des Fernsteuerungsgeräts von einer ersten Arbeitsmaschine auf eine zweite Arbeitsmaschine umgeschaltet wird, ein Bild anzeigt, das die jeweiligen tatsächlichen räumlichen Positionen der ersten Arbeitsmaschine und der zweiten Arbeitsmaschine, die gleichzeitig auf der Anzeigevorrichtung erfasst werden, umfasst,
**dadurch gekennzeichnet, dass**
das erste Unterstützungsverarbeitungselement aus den Positionen und Bildaufnahmerichtungen der Installationskameras (30) und den jeweiligen Positionen der ersten Arbeitsmaschine und der zweiten Arbeitsmaschine eine Installationskamera auswählt, die die erste Arbeitsmaschine (40a) und die zweite Arbeitsmaschine (40b) in einem Bildaufnahmebereich hiervon gleichzeitig erfasst, und
das zweite Unterstützungsverarbeitungselement eine Verarbeitung der Anzeige der Installationskamera durchführt, um ein aufgenommenes Bild, das von der Installationskamera, die von dem ersten Unterstützungsverarbeitungselement ausgewählt wurde, aufgenommen wurde, auf der Anzeigevorrichtung darzustellen.

2. Arbeitsunterstützungsserver gemäß Anspruch 1, wobei
die Installationskamera basierend auf den jeweiligen Positionen der ersten Arbeitsmaschine und der zweiten Arbeitsmaschine, die von dem ersten Unterstützungsverarbeitungselement erkannt werden, ein Bild aus der Vogelperspektive, das die jeweiligen, aus der Vogelperspektive betrachteten Positionen umfasst, aufnimmt und
das zweite Unterstützungsverarbeitungselement eine Verarbeitung der Anzeige des Bilds aus der Vogelperspektive durchführt, um das aus der Vogelperspektive aufgenommene Bild auf der Anzeigevorrichtung darzustellen.

3. Arbeitsunterstützungsserver gemäß Anspruch 1, wobei
der Arbeitsunterstützungsserver Folgendes ausführt:
eine Verarbeitung der Anzeige der Installationskamera, um das das erste Unterstützungsverarbeitungselement zu veranlassen, jede der Positionen und Bildaufnahmerichtungen der Installationskameras, die an der Arbeitsstelle, an der die Arbeitsmaschinen positioniert sind, zu erfassen und auf Basis der Positionen und Bildaufnahmerichtungen der Installationskameras sowie der jeweiligen Positionen der ersten Arbeitsmaschine und der zweiten Arbeitsmaschine eine Installationskamera auszuwählen, die die jeweiligen Positionen gleichzeitig erfasst, und das zweite Unterstützungsverarbeitungselement zu veranlassen, ein aufgenommenes Bild, das von der durch das erste Unterstützungsverarbeitungselement ausgewählten Installationskamera aufgenommen wurde, auf der Anzeigevorrichtung anzuzeigen, und
eine Verarbeitung der Anzeige eines Bilds aus der Vogelperspektive, um das erste Unterstützungsverarbeitungselement zu veranlassen, basierend auf den jeweiligen Positionen der ersten Arbeitsmaschine und der zweiten Arbeitsmaschine ein Bild aus der Vogelperspektive auszuwählen, das die jeweiligen, gleichzeitig erfassten Positionen umfasst, und das zweite Unterstützungsverarbeitungselement zu veranlassen, das von dem ersten Unterstützungsverarbeitungselement ausgewählte Bild aus der Vogelperspektive auf der Anzeigevorrichtung anzuzeigen, und
wobei das zweite Unterstützungsverarbeitungselement die Verarbeitung der Anzeige des Bilds aus der Vogelperspektive durchführt, wenn die Verarbeitung der Anzeige der Installationskamera nicht durchgeführt werden kann oder wenn bestimmt wird, dass die Verarbeitung der Anzeige der Installationskamera nicht durchgeführt werden soll.

4. Arbeitsunterstützungsserver gemäß Anspruch 3, wobei das erste Unterstützungsverarbeitungselement bestimmt, dass die Verarbeitung der Anzeige der Installationskamera nicht durchgeführt werden kann, wenn eine beliebige der Installationskameras, die an der Arbeitsstelle angeordnet sind, an der die erste Arbeitsmaschine positioniert ist, nicht jede der jeweiligen Positionen der ersten Arbeitsmaschine und der zweiten Arbeitsmaschine erfassen kann.

5. Arbeitsunterstützungsserver gemäß einem der Ansprüche 1 bis 4, wobei
das erste Unterstützungsverarbeitungselement eine Verarbeitung des Übergangs einer Bildanzeige durchführt, um einen Übergang eines die jeweiligen gleichzeitig erfassten Positionen umfassenden Bildes, das auf der Anzeigevorrichtung angezeigt wird, zu einem Zustand, bei dem die erste Arbeitsmaschine vergrößert dargestellt wird, einem Zustand, bei dem die erste Arbeitsmaschine verkleinert dargestellt wird, sodass die zweite Arbeitsmaschine ebenfalls erscheint, und einem Zustand, bei dem die zweite Arbeitsmaschine vergrößert dargestellt wird, in dieser Reihenfolge zu erstellen.

6. Verfahren zur Arbeitsunterstützung zum Unterstützen der Arbeit einer Vielzahl von zu betreibenden Arbeitsmaschinen, sodass die zu betreibenden Arbeitsmaschinen (40) in Reaktion auf eine Betätigung eines Fernsteuerungsgeräts, das eine Anzeigevorrichtung umfasst, selektiv ferngesteuert werden, wobei das Verfahren zur Arbeitsunterstützung folgende Schritte umfasst:
einen ersten Schritt des Erkennens der jeweiligen Positionen der durch das Fernsteuerungsgerät zu betreibenden Arbeitsmaschinen, und,
einen zweiten Schritt des Anzeigens, wenn ein Betriebsziel des Fernsteuerungsgeräts von einer ersten Arbeitsmaschine (40a) auf eine zweite Arbeitsmaschine (40b) umgeschaltet wird, eines Bildes, das die jeweiligen, gleichzeitig erfassten Positionen der ersten Arbeitsmaschine und der zweiten Arbeitsmaschine umfasst, auf der Anzeigevorrichtung,
**dadurch gekennzeichnet, dass**
in dem ersten Schritt eine Installationskamera (30), die die erste Arbeitsmaschine und die zweite Arbeitsmaschine in einem Bildaufnahmebereich hiervon gleichzeitig erfasst, auf Basis der Positionen und Bildaufnahmerichtungen der Installationskameras und der jeweiligen Positionen der ersten Arbeitsmaschine und der zweiten Arbeitsmaschine ausgewählt wird, und
in dem zweiten Schritt eine Verarbeitung der Anzeige einer Installationskamera zum Anzeigen eines aufgenommenen Bildes auf der Anzeigevorrichtung, das mittels der von dem ersten Unterstützungsverarbeitungselement ausgewählten Installationskamera aufgenommen wird, durchgeführt wird.

## Revendications

1. Serveur d'assistance au travail (10) assistant le travail d'une pluralité de machines de travail (40) à actionner de telle façon que les machines de travail à actionner sont actionnées sélectivement à distance en réponse à un actionnement d'un appareil d'actionnement à distance incluant un dispositif d'affichage, le serveur d'assistance au travail comprenant :
un premier élément de traitement d'assistance (121) reconnaissant des positions spatiales réelles respectives des machines de travail à actionner par l'appareil d'actionnement à distance ; et
un deuxième élément de traitement d'assistance (122) affichant, lorsqu'une cible d'actionnement de l'appareil d'actionnement à distance est commutée d'une première machine de travail à une deuxième machine de travail, une image incluant des positions spatiales réelles respectives de la première machine de travail et de la deuxième machine de travail capturées simultanément sur le dispositif d'affichage, **caractérisé en ce que**
le premier élément de traitement d'assistance sélectionne, à partir de positions et de directions de captation d'image des caméras d'installation (30) et des positions respectives de la première machine de travail et de la deuxième machine de travail, une caméra d'installation capturant simultanément la première machine de travail (40a) et la deuxième machine de travail (40b) dans une plage de captation d'image de celles-ci, et
le deuxième élément de traitement d'assistance exécute un traitement d'affichage de caméra d'installation pour l'affichage sur le dispositif d'affichage d'une image captée par la caméra d'installation sélectionnée par le premier élément de traitement d'assistance.

2. Serveur d'assistance au travail selon la revendication 1, dans lequel la caméra d'installation capte, sur la base des positions respectives de la première machine de travail et de la deuxième machine de travail reconnues par le premier élément de traitement d'assistance, une image vue à vol d' oiseau incluant les positions respectives vues de façon à vol d' oiseau, et
le deuxième élément de traitement d'assistance exécute un traitement d'affichage d'image vue à vol d' oiseau pour l'affichage sur le dispositif d'affichage d'une image vue à vol d' oiseau captée.

3. Serveur d'assistance au travail selon la revendication 1, dans lequel le serveur d'assistance au travail exécute
un traitement d'affichage de caméra d'installation destiné à amener le premier élément de traitement d'assistance à saisir chaque position et direction de captation d'image de caméras d'installation disposées sur un chantier où les machines de travail sont positionnées et à sélectionner, à partir des positions et des directions de captation d'image des caméras d'installation et des positions respectives de la première machine de travail et de la deuxième machine de travail, une caméra d'installation capturant simultanément les positions respectives, et à amener le deuxième élément de traitement d'assistance à afficher sur le dispositif d'affichage une image captée par la caméra d'installation sélectionnée par le premier élément de traitement d'assistance, et
un traitement d'affichage d'image vue à vol d' oiseau destiné à amener le premier élément de traitement d'assistance à sélectionner, sur la base des positions respectives de la première machine de travail et de la deuxième machine de travail, une image vue à vol d' oiseau incluant les positions respectives capturées simultanément, et à amener le deuxième élément de traitement d'assistance à afficher sur le dispositif d'affichage l'image vue à vol d' oiseau sélectionnée par le premier élément de traitement d'assistance, et
le deuxième élément de traitement d'assistance exécute le traitement d'affichage d'image vue à vol d' oiseau lorsque le traitement d'affichage de caméra d'installation ne peut pas être exécuté ou lorsqu'il est déterminé que le traitement d'affichage de caméra d'installation est réglé pour ne pas être exécuté.

4. Serveur d'assistance au travail selon la revendication 3, dans lequel
le premier élément de traitement d'assistance détermine que le traitement d'affichage de caméra d'installation ne peut pas être exécuté lorsque l'une quelconque des caméras d'installation disposées sur le chantier où la première machine de travail est positionnée ne peut pas capturer chacune des positions respectives de la première machine de travail et de la deuxième machine de travail.

5. Serveur d'assistance au travail selon l'une quelconque des revendications 1 à 4, dans lequel
le premier élément de traitement d'assistance exécute un traitement d'affichage d'image de transition pour effectuer une transition d'une image, incluant les positions respectives capturées simultanément, affichée sur le dispositif d'affichage vers un état dans lequel la première machine de travail est zoomée, un état dans lequel la première machine de travail est dézoomée de telle façon que la deuxième machine de travail apparaît également, et un état dans lequel la deuxième machine de travail est zoomée, dans cet ordre.

6. Procédé d'assistance au travail destiné à assister le travail d'une pluralité de machines de travail à actionner de telle façon que les machines de travail (40) à actionner sont actionnées à distance sélectivement en réponse à un actionnement d'un appareil d'actionnement à distance incluant un dispositif d'affichage, le procédé d'assistance au travail comprenant :
une première étape de reconnaissance de positions respectives des machines de travail à actionner par l'appareil d'actionnement à distance ; et
une deuxième étape d'affichage, lorsqu'une cible d'actionnement de l'appareil d'actionnement à distance est commutée d'une première machine de travail (40a) à une deuxième machine de travail (40b), d'une image incluant des positions respectives de la première machine de travail et de la deuxième machine de travail capturées simultanément sur le dispositif d'affichage,
**caractérisé en ce que** dans la première étape, une caméra d'installation (30) capturant simultanément la première machine de travail et la deuxième machine de travail dans une plage de captation d'image de celles-ci est sélectionnée à partir de positions et de directions de captation d'image des caméras d'installation et des positions respectives de la première machine de travail et de la deuxième machine de travail, et
dans la deuxième étape, un traitement d'affichage de caméra d'installation est exécuté pour l'affichage sur le dispositif d'affichage d'une image captée par la caméra d'installation sélectionnée par le premier élément de traitement d'assistance.
